# EUROPEAN PATENT SPECIFICATION

(11) **EP 0 853 218 B1**
(45) Date of publication and mention of the grant of the patent: **20.11.2002**
(21) Application number: 98200044.0
(22) Date of filing: 09.01.1998
(51) Int. Cl.: F24J 2/52, H01L 31/042

(54) **Mast structure**
Maststruktur
Structure de mât

(30) Priority: 10.01.1997 NL 1004973
(43) Date of publication of application: 15.07.1998
(73) Proprietor: Stork Infratechniek B.V., 5641 JA Eindhoven (NL)
(72) Inventor: Zaadnoordijk, Peter Sven, WN Raamsdonksveer (NL); Hendriks van Warbij, Johannes, 5311 PC Gameren (NL)
(74) Representative: de Bruijn, Leendert C.

(56) References cited:
- FR-A- 2 442 411
- FR-A- 2 557 370
- US-A- 4 102 326
- US-A- 4 265 422

## Description

The present invention relates to an assembly according to the preamble of claim 1. A device for supporting a solar panel is generally known in the prior art. For instance, a mast structure comprising a mast which when installed extends vertically only and on which a number of panel sections are mounted stepwise has been proposed. Such stepwise positioning is necessary because the panels are mounted at an angle with respect to the horizontal. Said angle is determined by the geographical location of the mast and is preferably perpendicular to the direction of solar radiation at a predetermined point at a predetermined time (including date). Because of the stepwise positioning it is necessary to install a complex frame structure because the lower part of each solar panel section must be a greater distance away from the mast than is the upper part. The stepwise positioning results in shadow forming by the projecting part (lower part), with the result that the part located beneath it which is positioned against the mast must be installed some distance below. Consequently, the length of the mast is not put to optimum use. Moreover, it is necessary to provide a complex adjusting mechanism to provide for adjustment to different elevations.

US Patent 4 102 326 describes an assembly of masts on which mirrors are mounted, which mirrors are directed towards a central panel receiving the solar radiation. US-A-4 265 422 describes an assembly according to the preamble of claim 1.

The aim of the present invention is to avoid the drawbacks according to the prior art and to this end the tubular body is so designed that the characterising features of claim 1 are used.

As a result of the curved design of the mast structure it is possible, depending on the position of mounting of the solar panel sections, to provide a single surface where said solar panel sections are mounted, which surface extends at a desired angle with respect to the ground surface. A complex mounting structure for panel sections projecting progressively further outwards, as in the prior art, is no longer necessary, whilst it is possible to mount all panel sections lying in a plane, as a result of which there can be no shadow effect and the available surface can be utilised to the optimum. As a result it is possible for a lower mast to suffice. As a result of the use of single mountings only, the production costs for the manufacture of a mast fall appreciably.

According to an advantageous embodiment of the invention, the mounting for the solar panels is provided at a point on the tubular body such that the plane of the solar panel at that point is essentially parallel to a tangent to said tubular body close to said mounting. If two mountings are used, the abovementioned tangent is, of course, a tangent to a point on the tubular body located between those two mountings.

According to an advantageous embodiment of the invention, bird-repellent means, such as serrations, are provided at the top of the panel.

The invention will be explained in more detail below with reference to an illustrative embodiment shown in the drawing. In the drawing:
Fig. 1 shows a side view of a mast provided with solar panels; and
Fig. 2 shows a front view of the installation according to Fig. 1.

In the drawing 1 indicates a mast with solar panels. The mast is indicated by 2 and comprises a straight section 5, which extends vertically, and, adjoining said section, a curved section 6. The straight, vertical section 5 is fixed close to the bottom thereof to a foundation 3 installed in the soil 4. Although the foundation 3 is shown here as a plate, it must be understood that this foundation can comprise any of the structures known in the prior art. For instance, it is possible to install a so-called tubular foundation, comprising the provision of a 4 to 5 metre undersized hole, bringing a pipe above such a hole and inserting said pipe into the ground, followed by back filling with sand and similar ballast material. The free end 5 of mast 2 is fixed to said pipe in a known manner.

The mast 2 shown here can be made of any material known in the prior art, such as steel or aluminium. Moreover, the mast can be produced by any method known from the prior art, such as by rolling. It is possible for the diameter of mast 2 to be the same over the entire length, but is also possible for the diameter to decrease in some way towards the top. The mast can have a length of, for example, 10 metres.

There are two mountings 7 and 8 on the curved section 6, a panel 9 extending between the mountings. If the mast is produced in larger numbers for a specific location, it is possible to mount the mountings 7 and 8 in a fixed position. In other cases it is possible to arrange the mountings such that they are adjustable. In any event it is possible in a particularly simple manner to adjust the mountings 7 and 8 to any desired position, depending on the geographical position, on the curved mast 6. That part of curved section 6 which extends beyond mounting 7 can optionally be removed.

As can be seen from Fig. 2, a number of solar panel sections 10 is mounted on panel 9. A so-called bird comb 11 consisting of a relatively sharp strip of metal material is located above the topmost solar panel section 10.

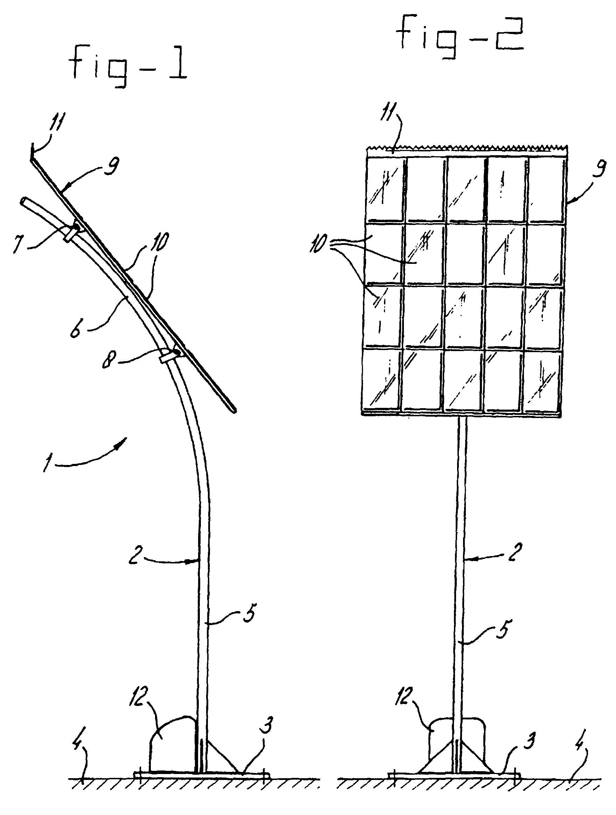

It can be seen from Fig. 1 that a cabinet 12, in which the control equipment is located, is also installed. Masts of this type can be used independently, for example provided with batteries to provide lighting at night, or for telecommunication networks, but it is also possible for such masts to be connected to the electricity grid for the supply of electricity. The contents of cabinet 12 will depend on the application. The connecting leads between cabinet 12 and solar panel sections 10 are not shown. It will be understood that cabinet 12 can be sited in a different location, but it is also readily possible to mount the cabinet higher up the mast so that it is out of reach for unauthorised persons. The mast can also be provided with ladder sections to give access to the solar panel sections. It has been found that the vibrational stresses, in particular generated by wind, are appreciably lower with the structure shown here, consisting of a single panel 9, than with conventional structures where a number of solar panels is mounted located above one another like roof tiles, but not overlapping one another. The width of panel 9 can be, for example, 6 metres.

If the mast described above has been correctly set up for a specific area in The Netherlands, the position of the panel 9, that is to say the mountings 7 and 8, relative to the mast will have to be adjusted if the mast is moved to an area further to the north or further to the south. The mast shown here is, for example, suitable for generating two kilowatt hour under optimum conditions.

It will be understood that the structure described above is merely an example of the inventive concept. For instance, it is possible to provide a mast assembly consisting of two or more masts as shown in the figures, between which masts the solar panels extend. This and other obvious variants are considered to fall within the scope of the appended claims.

## Claims

1. Assembly comprising a solar panel and a device for supporting such solar panel, said device comprising a tubular body (2) which is provided close to one end with a mounting suitable for joining to a foundation (3) and which is provided close to the other end with at least one mounting (7, 8) for said solar panel (9), **characterised in that** the tubular body (2) is so designed that in the position of use it is curved in a plane perpendicular to the ground surface and perpendicular to the solar panel, said at least one mounting (7, 8) for the solar panel being mounted on the curved section, remote from the ends thereof.

2. Assembly according to claim 1, comprising a single mounting for the solar panel, wherein the mounting is provided at a point on the tubular body such that the plane of the solar panel at that point is essentially parallel to a tangent to said tubular body at the location of said mounting.

3. Assembly according to claim 1, comprising two mountings (7, 8) located some distance apart, on which the solar panel is mounted.

4. Assembly according to one of the preceding claims, wherein the solar panel comprises a number of panel sections (10), all of which are mounted in one plane.

5. Assembly according to one of the preceding claims, wherein the solar panel is provided at the top with bird-repellent serrations (11).

## Patentansprüche

1. Aufbau, der ein Solarpaneel und eine Vorrichtung zum Lagern eines derartigen Solarpaneels aufweist, wobei die Vorrichtung einen rohrförmigen Körper (2) aufweist, der nahe an einem Ende mit einer Halterung ausgestattet ist, die zum Verbinden mit einem Fundament (3) geeignet ist, und der nahe an dem anderen Ende mit mindestens einer Halterung (7, 8) für das Solarpaneel (9) ausgestattet ist, **dadurch gekennzeichnet, dass** der rohrförmige Körper (2) derart ausgelegt ist, dass er in der Position der Verwendung in einer Ebene senkrecht zu der Untergrundoberfläche und senkrecht zu dem Solarpaneel gekrümmt ist, wobei mindestens eine Halterung (7, 8) für das Solarpaneel auf dem gekrümmten Abschnitt, entfernt von dessen Enden, montiert ist.

2. Aufbau nach Anspruch 1, der eine einzelne Halterung für das Solarpaneel aufweist, worin die Halterung in einem Punkt auf dem rohrförmigen Körper derart vorgesehen ist, dass die Ebene des Solarpaneels in dem Punkt im wesentlichen parallel ist zu einer Tangente zu dem rohrförmigen Körper an dem Ort der Halterung.

3. Aufbau nach Anspruch 1, der zwei Halterungen (7, 8) aufweist, die mit etwas Abstand angeordnet sind, auf welchen das Solarpaneel montiert ist.

4. Aufbau nach einem der vorhergehenden Ansprüche, worin das Solarpaneel eine Anzahl von Paneelabschnitten (10) aufweist, die alle in einer Ebene montiert sind.

5. Aufbau nach einem der vorhergehenden Ansprüche, worin das Solarpaneel auf der Oberseite mit vogelabhaltenden, gezackten Rändern (11) ausgestattet ist.

## Revendications

1. Assemblage comprenant un panneau solaire et un dispositif pour supporter ce panneau solaire, ledit dispositif comprenant un corps tubulaire (2) muni près d'une extrémité d'une monture convenable pour raccordement à une fondation (3) et muni près de l'autre extrémité d'au moins une monture (7, 8) pour ledit panneau solaire (9), **caractérisé en ce que** le corps tubulaire (2) est conçu de telle sorte que dans la position d'utilisation il soit incurvé dans un plan perpendiculaire à la surface du sol et perpendiculaire au panneau solaire, ladite au moins une monture (7, 8) pour le panneau solaire étant montée sur la section incurvée, éloignée de ses extrémités.

2. Assemblage selon la revendication 1, comprenant une monture unique pour le panneau solaire, dans lequel la monture est prévue en un point du corps tubulaire tel que le plan du panneau solaire en ce point est sensiblement parallèle à une tangente audit corps tubulaire à l'emplacement de ladite monture.

3. Assemblage selon la revendication 1, comprenant deux montures (7, 8) espacées d'une certaine distance, sur lesquelles est monté le panneau solaire.

4. Assemblage selon l'une quelconque des revendications précédentes, dans lequel le panneau solaire comprend un certain nombre de sections de panneau (10), l'ensemble d'entre elles étant monté dans un plan.

5. Assemblage selon l'une quelconque des revendications précédentes, dans lequel le panneau solaire est muni sur le haut de dentelures repoussant les oiseaux (11).
